# EUROPEAN PATENT APPLICATION

(11) **EP 4 293 538 A1**
(43) Date of publication of application: **20.12.2023**
(21) Application number: 22810314.9
(22) Date of filing: 29.04.2022
(51) Int. Cl.: G06F 16/9535, G06F 16/9538

(54) **HOT EVENT PRESENTATION METHOD AND APPARATUS FOR APPLICATION, AND DEVICE, MEDIUM AND PRODUCT**

(30) Priority: 25.05.2021 CN 202110574046
(71) Applicant: Beijing Zitiao Network Technology Co., Ltd., Beijing 100190 (CN)
(72) Inventor: LI, Zeyu, Beijing 100086 (CN); LI, Zhuang, Beijing 100086 (CN)
(74) Representative: Dentons UK and Middle East LLP
(86) International application number: PCT/CN2022/090276
(87) International publication number: WO 2022/247585

(57) **Abstract**

Provided are a hot event presentation method and apparatus for an application, and a device, a medium and a product. The method comprises: playing first multimedia content in a target event (S101); and displaying a video set of the target event in a playing page of the first multimedia content (S102), wherein the video set comprises a first card, a second card and a timeline, the first card is used for triggering the playing of second multimedia content in the target event, the second card is used for triggering the playing of third multimedia content in the target event, an occurrence time period of the second multimedia content and an occurrence time period of the third multimedia content are recorded in the timeline, the first card is displayed corresponding to the occurrence time period of the second multimedia content, and the second card is displayed corresponding to the occurrence time period of the third multimedia content.

## Description

### CROSS-REFERENCE TO RELATED APPLICATIONS

The present disclosure is based on and claims priority to the Chinese Patent Application No. 202110574046.4 filed on May 25, 2021, the disclosure of which is incorporated by reference herein in its entirety.

### TECHNICAL FIELD

The present disclosure relates to the field of Internet technologies, and in particular, to a hot event display method and apparatus of application, a device, a medium, and a product.

### BACKGROUND

With the continuous development of internet technologies, Applications (APPs) often select hot events causing extensive attention, causing intense discussion, or causing strong reaction in society to be presented.

### SUMMARY

In a first aspect, the present disclosure provides a hot event display method for application, comprising: playing first multimedia content in a target event; displaying a video collection of the target event in a playing page of the first multimedia content, wherein the video collection comprises a first card, a second card and a timeline, the first card is for triggering playing of second multimedia content in the target event, the second card is for triggering playing of third multimedia content in the target event, the timeline records a period of occurrence of the second multimedia content and a period of occurrence of the third multimedia content, the first card and the period of occurrence of the second multimedia content are displayed in correspondence with each other, and the second card and the period of occurrence of the third multimedia content are displayed in correspondence with each other.

In some embodiments, after receiving a triggering operation on the first card, the method further comprises: switching from playing the first multimedia content to playing the second multimedia content.

In some embodiments, the method further comprises: displaying the video collection in a playing page of the second multimedia content.

In some embodiments, the method further comprises: hiding the video collection in a playing page of the second multimedia content.

In some embodiments, a region where the video collection is located is on the bottom of the playing page.

In some embodiments, the first card comprises: at least one of a cover of the second multimedia content or a title of the second multimedia content, or the first card comprises: at least one of a frame of the second multimedia content or the title of the second multimedia content; the second card comprises: at least one of a cover of the third multimedia content or a title of the third multimedia content, or the first card comprises: at least one of a frame of the third multimedia content or the title of the third multimedia content.

In some embodiments, the method further comprises: according to a sequence of a period of occurrence of each multimedia content in the target event, displaying a card and a timeline corresponding to each multimedia content in the video collection.

In some embodiments, the method further comprises: highlighting a card and a period of occurrence corresponding to the first multimedia content.

In some embodiments, the method comprises: after receiving a first triggering operation on one control in the playing page in a process of playing the first multimedia content, or after the playing of the first multimedia content is finished and the first triggering operation on one control in the playing page is not received, displaying the video collection in the playing page.

In some embodiments, the method further comprises: after receiving a second triggering operation on one control, or after receiving a triggering operation on a blank region except for a region where the video collection is located in the playing page, hiding the video collection in the playing page.

In some embodiments, the method further comprises: after receiving a swipe operation on a region where the video collection is located, displaying, in the video collection, a third card and a period of occurrence of fourth multimedia content in the target event recorded in the timeline, wherein the third card is for triggering playing of the fourth multimedia content, and the third card and the period of occurrence of the fourth multimedia content are displayed in correspondence with each other.

In some embodiments, the method further comprises: after receiving a first swipe operation on a blank region except for a region where the video collection is located in the playing page, playing one multimedia content in other event different from the target event; or after receiving a second swipe operation on the blank region except for the region where the video collection is located in the playing page, switching from the playing page to display a user account page corresponding to the first multimedia content.

In some embodiments, the video collection of the target event is the same in clients.

In a second aspect, the present disclosure provides a hot event display apparatus for application, comprising: a playing module configured to play first multimedia content in a target event; a display module configured to display a video collection of the target event in a playing page of the first multimedia content, wherein the video collection comprises a first card, a second card and a timeline, the first card is for triggering playing of second multimedia content in the target event, the second card is for triggering playing of third multimedia content in the target event, the timeline records a period of occurrence of the second multimedia content and a period of occurrence of the third multimedia content, the first card and the period of occurrence of the second multimedia content are displayed in correspondence with each other, and the second card and the period of occurrence of the third multimedia content are displayed in correspondence with each other.

In some embodiments, the playing module is further configured to switch from the first multimedia content to play the second multimedia content, after receiving a triggering operation on the first card.

In some embodiments, the display module is configured to display the video collection in a playing page of the second multimedia content.

In some embodiments, the apparatus further comprises: a hiding module.

The hiding module is configured to hide the video collection in a playing page of the second multimedia content.

In some embodiments, a region the video collection is located is on the bottom of the playing page.

In some embodiments, the first card comprise: at least one of a cover of the second multimedia content or a title of the second multimedia content, or the first card comprises: at least one of a frame of the second multimedia content or the title of the second multimedia content; the second card comprises: at least one of a cover of the third multimedia content or a title of the third multimedia content, or the first card comprises: at least one of a frame of the third multimedia content or the title of the third multimedia content.

In some embodiments, the display module is configured to: according to a sequence of a period of occurrence of each multimedia content in the target event, display a card and a timeline corresponding to each multimedia content in the video collection.

In some embodiments, the display module is further configured to: highlight a card and a period of occurrence corresponding to the first multimedia content.

In some embodiments, the display module is configured to: after receiving a first triggering operation on one control in the playing page in a process of playing the first multimedia content, or after the playing of the first multimedia content is finished and the first triggering operation on one control in the playing page is not received, display the video collection in the playing page.

In some embodiments, the hiding module is configured to: after receiving a second triggering operation on one control, or after receiving a triggering operation on a blank region except for a region where the video collection is located in the playing page, hide the video collection in the playing page.

In some embodiments, the display module is further configured to: after receiving a swipe operation on a region where the video collection is located, display, in the video collection, a third card and a period of occurrence of fourth multimedia content in the target event recorded in the timeline, wherein the third card is for triggering playing of the fourth multimedia content, and the third card and the period of occurrence of the fourth multimedia content are displayed in correspondence with each other.

In some embodiments, the playing module is further configured to: after receiving a first swipe operation on a blank region except for a region where the video collection is located in the playing page, play one multimedia content in other event different from the target event.

In some embodiments, the display module is further configured to: after receiving a second swipe operation on a blank region except for a region where the video collection is located in the playing page, switch from the playing page to display a user account page corresponding to the first multimedia content.

In some embodiments, the video collection of the target event is the same in clients.

In a third aspect, the present disclosure provides an electronic device, comprising: a memory and a processor; wherein the memory is configured to store program instructions; the processor is configured to invoke the program instructions in the memory to cause the electronic device to perform the hot event display method for application in the first aspect and any embodiment of the first aspect.

In a fourth aspect, the present disclosure provides a non-transitory computer storage medium comprising computer instructions, which when run on an electronic device, cause the electronic device to perform the hot event display method for application in the first aspect and any embodiment of the first aspect.

In a fifth aspect, the present disclosure provides a computer program product, which when run on a computer, causes the computer to perform the hot event display method for application in the first aspect and any embodiment of the first aspect.

In a sixth aspect, the present disclosure provides a computer program comprising: instructions, which when executed by a processor, cause the processor to perform the hot event display method for application in any of the above embodiments.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.

In order to more clearly illustrate the embodiments of the present disclosure or technical solutions in the prior art, the drawings needing to be used in the description of the embodiments or the prior art will be briefly discussed below, and it is obvious for those skilled in the art that other drawings can be obtained from these drawings without paying out creative efforts.
Figs. 1A-1G are schematic diagrams of human-computer interaction interfaces, provided by embodiments of the present disclosure.
Fig. 2 is a schematic flow diagram of a hot event display method for application, provided by embodiments of the present disclosure.
Fig. 3 is a schematic structural diagram of a hot event display apparatus for application, provided by embodiments of the present disclosure.
Fig. 4 is a schematic structural diagram of a hot event display apparatus for application, provided by embodiments of the present disclosure.

### DETAILED DESCRIPTION

In order to more clearly understand the above objectives, features and advantages of the present disclosure, solutions of the present disclosure will be further described below. It should be noted that, without conflicts, the embodiments of the present disclosure and features in the embodiments may be combined with each other.

In the following description, numerous specific details are set forth in order to provide a thorough understanding of the present disclosure, but the present disclosure may be practiced otherwise than as described herein; apparently, the embodiments in the description are only a few embodiments of the present disclosure, and not all embodiments.

In some embodiments, the present disclosure provides a hot event display method and apparatus of application, a device, a non-transitory computer storage medium, and a computer program product, where, by displaying, in a page of the application playing multimedia contents of one hot event, relevant information of a plurality of multimedia contents associated with the hot event, a user can autonomously select to view the relevant information of the associated multimedia contents while viewing the multimedia content, to obtain a cause and effect of the hot event completely.

The hot event display method for application in the present disclosure is executed by an electronic device or an application, webpage, official account and the like in the electronic device. The electronic device may be a tablet computer, a mobile phone, a wearable device, an in-vehicle device, an Augmented Reality (AR)/Virtual Reality (VR) device, a notebook computer, an ultra-mobile personal computer (UMPC), a netbook, a Personal Digital Assistant (PDA), a smart television, a smart screen, a high definition television, a 4K television, a smart speaker, a smart projector, and the like, and the specific type of the electronic device is not limited in this disclosure.

The present disclosure does not limit the type of an operating system of the electronic device. For example, Android systems, Linux systems, Windows systems, iOS systems, etc.

When a user watches a plurality of multimedia contents (such as videos) associated with a hot event in an application, the user cannot quickly and comprehensively know the cause and effect of the hot event, and needs to quit the application or search in the application related contents of the hot event, which reduces the interest of the user in continuously watching other multimedia contents in the application.

To solve the above technical problem, or at least partially solve the above technical problem, the present disclosure provides a hot event display method and apparatus of an application, a device, a medium, and a product.

Based on the foregoing description, the embodiments of the present disclosure will take an electronic device as an example, and detail the hot event display method for application provided by the present disclosure, in combination with the accompanying drawings and application scenarios.

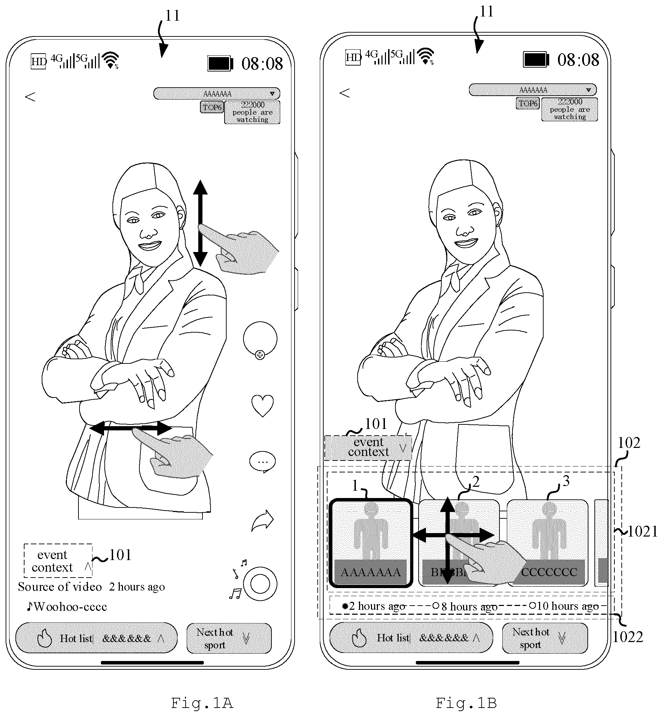

With reference to Fig. 1A to Fig. 1G, some implementation processes of the hot event display method for application of the present disclosure are described.

For convenience of description, in Fig. 1A to Fig. 1G, as an example, the electronic device is a mobile phone, a short video social APP (App 1 for short) is installed in the mobile phone, multimedia content of a hot event can be played in the App 1, and the multimedia content is a video.

Please refer to Figs. 1A to 1G, which are schematic diagrams of human-computer interaction interfaces provided by embodiments of the present disclosure.

### 1. Playing video 1

The App 1 may display a user interface 11 as exemplarily shown in Fig. 1A on the mobile phone, where the user interface 11 is used for displaying one page of the App 1, and the App 1 may execute a certain set of functions in one page of the App 1, such as playing multimedia content of a hot event, for example, a video. The video 1 is played in the user interface 11, and the hot event corresponding to the video 1 is hot event 1.

11. Triggering an event context of the hot event 1 through a control 101

In Fig. 1A, in addition to playing the video 1 in the user interface 11, the user interface 11 may comprise: the control 101 in a folded state, for indicating that a user may trigger the control 101 in the user interface 11, to trigger the display of the event context of the hot event 1, where the event context of the hot event 1 is used to describe relevant information of all videos comprised in the hot event 1.

The control 101 can have two presentation states, i.e., folded state and unfolded state. The control 101 can switch between the folded state and the unfolded state. The control 101 may adopt a representation mode such as symbol, text, and the like, and the present disclosure does not limit the representation mode and the presentation position of the control 101 on the user interface 11.

As the video 1 is played, after the App 1 receives an operation, such as clicking on the control 101, performed by the user in the user interface 11 shown in Fig. 1A, the App 1 may display, on the user interface 11, a region 102 and the control 101 in an unfolded state, as exemplarily shown in Fig. 1B, where the region 102 is used for presenting the event context of the hot event 1.

The region 102 may comprise: a region 1021 and a region 1022.

The region 1021 is used for presenting relevant information of a plurality of multimedia contents in the event context of the hot event 1, where the relevant information may be displayed in a manner such as picture, text, video, and cover. The present disclosure does not limit parameters such as number and content of the multimedia contents in the event context of the hot event 1. In some embodiments, the plurality of multimedia contents in the event context of the hot event 1 may be posted in the App 1 by the same user, or posted in the App 1 by different users.

In some embodiments, the plurality of multimedia contents in the event context of the hot event 1 shown in Fig. 1B is illustrated by taking a card 1, a card 2, and a card 3 as examples.

The card 1 is used for displaying relevant information of the video 1 in the event context of the hot event 1. The card 1 may comprise: a cover and title of the video 1, or the cover of the video 1, or the title of video 1. It should be noted that the cover mentioned in the present disclosure may be replaced with a frame in the video 1.

The card 2 is used for displaying relevant information of a video 2 in the event context of the hot event 1. The card 2 may comprise: a cover and title of the video 2, or the cover of the video 2, or the title of the video 2. It should be noted that the cover mentioned in the present disclosure may be replaced with a frame in the video 2.

The card 3 is used for displaying relevant information of a video 3 in the event context of the hot event 1. The card 3 may comprise: a cover and title of the video 3, or the cover of the video 3, or the title of the video 3. It should be noted that the cover mentioned in the present disclosure may be replaced with a frame in the video 3.

The cover mentioned in the present disclosure may be represented using a first frame image or a key frame image of the video. The present disclosure does not limit the display position of the title of each hot event.

The region 1022 is used for presenting period of occurrence of the plurality of multimedia contents in the event context of the hot event 1. In some embodiments, the period of occurrence of each multimedia content may be displayed in the region 1022 in a timeline manner, and the period of occurrence may be expressed in a manner of text, number, or the like.

The display sequence of the period of occurrence of the multimedia contents in the timeline may be arranged according to a time sequence of the period of occurrence of the multimedia contents. In some embodiments, the period of occurrence of the video 1 is 2 hours ago, the period of occurrence of the video 2 is 8 hours ago, and the period of occurrence of the video 3 is 10 hours ago. Then, on the timeline, the period of occurrence of the video 1 may be displayed before the period of occurrence of the video 2, and the period of occurrence of the video 2 may be displayed before the period of occurrence of the video 3.

It should be noted that, in addition to the above manner, the display sequence of the period of occurrence of the multimedia contents in the timeline may also in the order of the hot degree of the multimedia contents, and the present disclosure is not limited to the foregoing manner.

In addition, the region 1022 is also used for highlighting and distinguishing the period of occurrence of each multimedia content in the event context of the hot event 1. In some embodiments, the highlighting and distinguishing display may be performed in the region 1022 by setting a period identification before the period of occurrence, and the period identification may be implemented by adding a shape, changing a background color, setting a gray scale, and the like.

In some embodiments, the periods of occurrence of the plurality of multimedia contents (such as videos) in the event context of the hot event 1 shown in Fig. 1B are illustrated by taking a period 1, a period 2, and a period 3 on the timeline as an example.

The period 1 is used for displaying the period of occurrence of the video 1 in the event context of the hot event 1, wherein the period 1 may comprise the period of occurrence of the video 1 and a period identification 1.

The period 2 is used for displaying the period of occurrence of the video 2 in the event context of the hot event 1, wherein the period 2 may comprise the period of occurrence of the video 2 and a period identification 2.

The period 3 is used for displaying the period of occurrence of the video 3 in the event context of the hot event 1, wherein the period 3 may comprise the period of occurrence of the video 3 and a period identification 3.

The sequence of the period 1, the period 2 and the period 3 is from the near to the distant.

The relevant information of the same multimedia content in the region 1021 and the region 1022 corresponds to the period of occurrence, that is, the card 1 corresponds to the period 1, the card 2 corresponds to the period 2, and the card 3 corresponds to the period 3.

In addition, when the multimedia content corresponding to the video 1 is displayed in the region 102, the relevant information of the multimedia content in the region 1021 and/or the period of occurrence of the multimedia content in the region 1022 may be highlighted, so that the user can quickly know the position of the video 1 in the event context of the hot event 1.

In Fig. 1B, the card 1 and the period 1 may be highlighted, that is, the card 1 describes the relevant information corresponding to the video 1, and the period 1 describes the period of occurrence corresponding to the video 1. In addition, the highlighted card 1 may be positioned where the first card in the region 102 is located.

To sum up, by triggering the control 101 for presenting the event context of the hot event 1 by the user, the App 1 may present the event context of the hot event 1 to the user while playing the video 1, so that the user can quickly know the event context of the hot event 1. Accordingly, this complies with the subjective intention of the user, and enables close interaction with the user.

12. Automatically triggering the event context of the hot event 1

As the video 1 plays, the App 1 may automatically trigger and present the event context of the hot event 1. Automatically triggering the event context of the hot event 1 may comprise the following two implementation.

In implementation 1, the control 101 in the folded state is displayed in the user interface 11, and the video 1 is played on the user interface 11. If a triggering operation acting on the control 101 is not detected within a preset duration, and after the preset duration, the App 1 may automatically pop up the event context of the hot event 1 in the user interface 11. In some embodiments, the App 1 may display the region 102 as shown in Fig. 1B on the user interface 11.

In implementation 2, the control 101 is not displayed in the user interface 11, and the video 1 is played on the user interface 11. After a preset duration, the App 1 may automatically pop up the event context of the hot event 1 in the user interface 11. In some embodiments, the App 1 may display the region 102 as shown in Fig. 1B on the user interface 11. The preset duration can be set to be less than or equal to a duration of the end of the playing of the video 1.

To sum up, the App 1 can automatically trigger the presentation of the event context of the hot event 1, and present the event context of the hot event 1 to the user while playing the video 1, so that the user can quickly know the event context of the hot event 1. Accordingly, without requiring a user to trigger a control, the interest of the user in watching the event context of the hot event 1 is stimulated.

### 2. Swiping to browse more hot events in the region 102

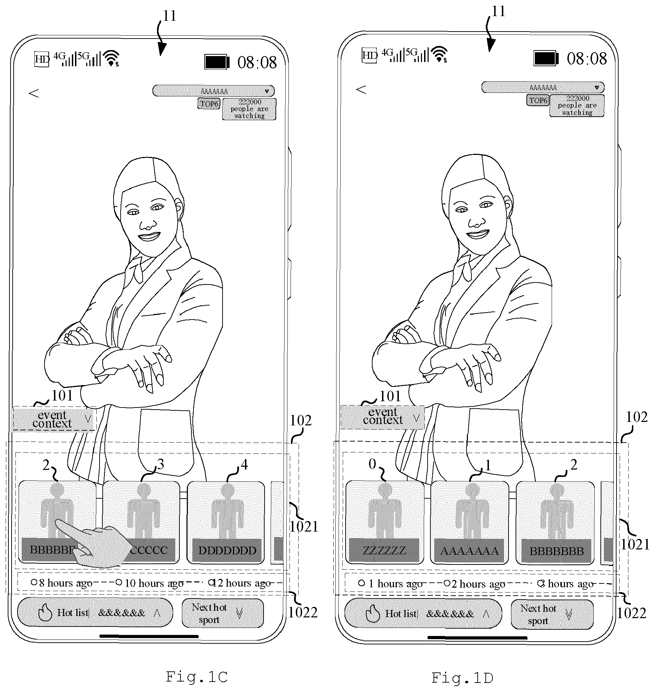

In the process of playing the video 1, when the App 1 receives a swipe operation as an example performed by the user on the region 102 shown in Fig. 1B, the App 1 may display in the region 102 a updated region 102 exemplarily shown in Fig. 1C or display in the region 102 a updated region 102 exemplarily shown in Fig. 1D, in order to display more multimedia contents in the event context of the hot event 1.

In Fig. 1C, the region 1021 in the updated region 102 may comprise: a card 2, a card 3, and a card 4. The region 1022 in the updated region 102 may comprise: a period 2, a period 3, and a period 4. The card 2 corresponds to the period 2, the card 3 corresponds to the period 3, and the card 4 corresponds to the period 4.

The card 4 is used for displaying relevant information of a video 4 in the event context of the hot event 1. The card 4 may comprise: a cover and title of the video 4, or the cover of the video 4, or the title of the video 4. It should be noted that the cover mentioned in this disclosure may be replaced with a frame in the video 4.

The period 4 is used for displaying a period of occurrence of the video 4 in the event context of the hot event 1. The period 4 may comprise the period of occurrence of the video 4 and a period identification 4.

It can be seen that the card 4 is displayed after the card 3, and that the period 4 is displayed after the period 3.

To sum up, when there are still other multimedia contents in the event context of the hot event 1 after the periods of occurrence of the already displayed multimedia contents, the other multimedia contents in the event context of the hot event 1 may be arranged after the already displayed multimedia contents. Thus, the App 1 may, based on the swipe operation performed on the region 102, display the other multimedia contents in the event context of the hot event 1 after the already displayed multimedia contents. The swipe operation here may comprise swipe left or swipe up, etc.

In addition, if there is no other multimedia contents in the event context of the hot event 1 after the periods of occurrence of the already displayed multimedia contents, or there is no other multimedia contents in the event context of the hot event 1 before the periods of occurrence of the already displayed multimedia contents, the App 1 may stop displaying more multimedia contents in the event context of the hot event 1.

In Fig. 1D, the region 1021 in the updated region 102 may comprise: a card 0, a card 1, and a card 2. The region 1022 in the updated region 102 may comprise: a period 0, a period 1, and a period 2. The card 0 corresponds to the period 0, the card 1 corresponds to the period 1, and the card 2 corresponds to the period 2.

The card 0 is used for displaying relevant information of a video 0 in the event context of the hot event 1. The card 0 may comprise: a cover and title of the video 0, or the cover of the video 0, or the title of the video 0. It should be noted that the cover mentioned in this disclosure may be replaced with a frame in the video 0.

The period 0 is used for displaying a period of occurrence of the video 0 in the event context of the hot event 1. The period 0 may comprise a period of occurrence of the video 0 and a period identification 0.

As can be seen, the card 0 is displayed before the card 1 and the period 0 is displayed before the period 1.

To sum up, if there are still other multimedia contents in the event context of the hot event 1 before the period of occurrence of the already displayed multimedia contents, the other multimedia contents in the event context of the hot event 1 may be arranged before the already displayed multimedia contents. Thus, the App 1 may, based on the swipe operation performed on the region 102, display other multimedia contents in the event context of the hot event 1 before the already displayed multimedia contents. The swipe operation here may comprise swipe right or swipe down, etc.

It should be noted that, if the number of the multimedia contents in the event context of the hot event 1 is large, in response to an unfolded operation of the user, the App 1 can enlarge a display area of the region 102, which facilitates displaying more multimedia contents in the event context of the hot event 1, to meet the user's requirement for browsing more multimedia contents.

To sum up, when the event context of the hot event 1 is presented, the App 1 can support the user to swipe to browse more multimedia contents in the event context of the hot event 1, so that the user can conveniently and quickly know the cause and effect of the hot event 1.

### 3. Clicking on the card 3 in the region 102 to play the video 3

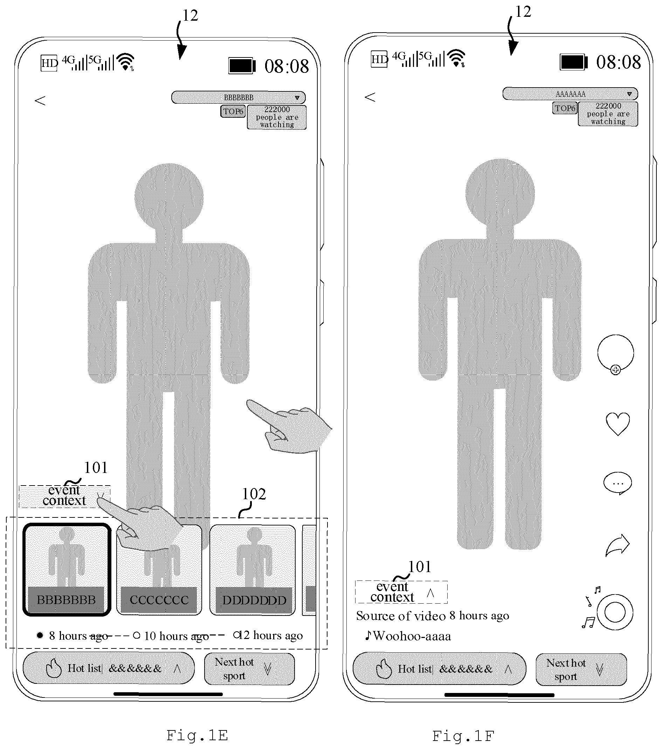

In the process of playing the video 1, when the App 1 receives an operation of clicking on the card 3 performed by the user on the region 102 shown in Fig. 1C, the App 1 may display in a mobile phone a user interface 12 exemplarily shown in Fig. 1E or Fig. 1F. The video 3 is played in the user interface 12.

In Fig. 1E, the user interface 12 may also comprise: a control 101 in an unfolded state and a region 102. The region 102 is used to present the event context of the hot event 1.

The region 102 in Fig. 1E may comprise a variety of implementations.

In some embodiments, the location of the card in the region 102 in Fig. 1E may remain the same as the location of the card shown in Fig. 1C. That is, some implementations of the region 102 in Fig. 1E may refer to the description of the updated region 102 in Fig. 1C, and details are not repeated here.

In addition, the region 102 in Fig. 1E may highlight the card 3 and the period 3, that is, the card 3 describes relevant information of the multimedia content corresponding to the video 3, and the period 3 describes the period of occurrence of the multimedia content corresponding to the video 3.

In other embodiments, the region 102 in Fig. 1E may display the video 3 and a plurality of multimedia contents after the period of occurrence of the video 3. The region 102 in Fig. 1E may comprise: the card 3 and a plurality of cards located after the card 3, and the period 3 and a plurality of periods located after the period 3.

Additionally, the region 102 in Fig. 1E may highlight the card 3 and the period 3, and the highlighted card 3 may be positioned where a first card in the region 102 is located.

It should be noted that, the region 102 in Fig. 1E may be hidden automatically during the process of playing the video 3, may be hidden in response to a triggering operation on the control 101, and may also be hidden in response to a triggering operation on a blank region of the user interface 12, which is not limited in this disclosure.

In Fig. 1F, the user interface 12 may further comprise: a control 101 in a folded state, and may not comprise a region 102. Thus, the App 1 may automatically hide the event context of the hot event 1.

To sum up, when the event context of the hot event 1 is presented, the App 1 can support the user to select to view other multimedia contents in the event context of the hot event 1, so that the user can clearly know the other multimedia contents. In addition, in the process of playing the other multimedia contents, the App 1 can automatically hide the event context of the hot event 1, so that the problem that the event context of the hot event 1 occupies too much display area to reduce the video viewability is avoided, the event context of the hot event 1 can be continuously presented, and a user can conveniently continuously know the cause and effect of the hot event 1.

### 4. Switching from the hot event 1 to a hot event 2

In the process of playing the video of the hot event 1, when the App 1 receives a swipe operation such as swipe up or down performed by the user on the user interface 11 shown in Fig. 1A, the App 1 may, on the mobile phone, switch from playing the video 1 to playing the video in the hot spot 2. The hot event 1 and the hot event 2 are not the same hot event.

In addition, when there are multiple videos in the hot event 2, the user interface where the videos in the hot event 2 are played may remain the same as the user interface 11.

To sum up, in the process of playing a video in one hot event, the App 1 may switch from one hot event to playing a video in another hot event, so that the user can watch more hot events in the App 1 conveniently.

### 5. Switching from the playing page of the video 1 to display an account page of a publisher of the video 1

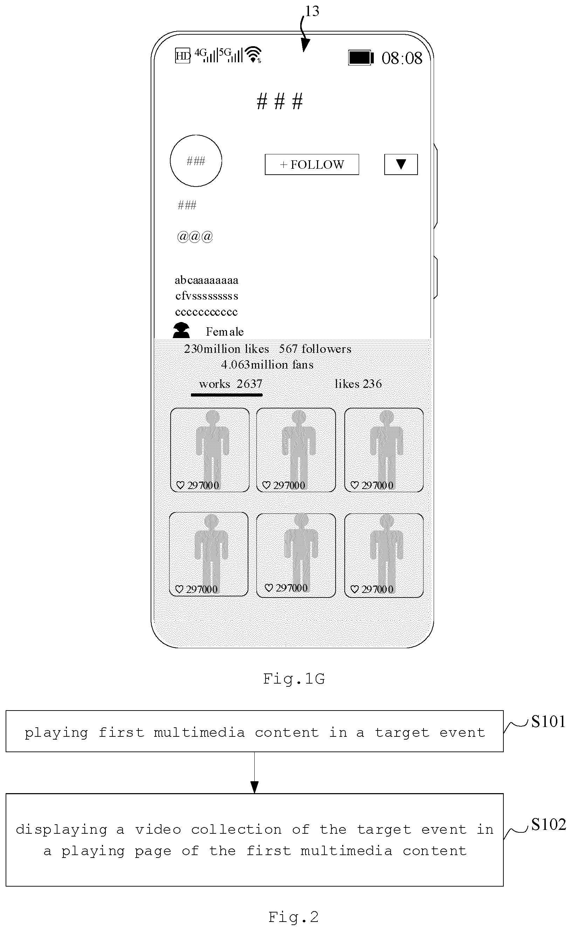

In the process of playing the video of the hot event 1, when the App 1 receives a swipe operation such as swipe left performed by the user on the user interface 11 shown in Fig. 1A, the App 1 may display on the mobile phone a user interface 13 exemplarily shown in Fig. 1G, for displaying an account page of the publisher of the video 1.

The account page of the publisher of the video 1 can display an account name used by the publisher of the video 1 to register on the App 1, and the account name can be displayed on the user interface 13 in a representation mode such as number, text or image.

In addition, the account page of the publisher of the video 1 may also display relevant information of a plurality of videos published by the publisher on the App 1, wherein the relevant information may be displayed on the user interface 13 in a display mode such as picture, text, and video.

To sum up, in the process of playing the video 1, the App 1 supports switching from the playing page of the multimedia content to the account page of the publisher of the multimedia content, so that the user can obtain the relevant information of the publisher in time. In addition, the publishers of multimedia contents in the hot event 1 may be the same or different.

### 6. Exiting the playing page of the video 1

In the process of playing the video of the hot event 1, when the App 1 receives a swipe operation such as swipe right performed by the user on the user interface 11 shown in Fig. 1A, the App 1 may display on the mobile phone a playing page after exiting the video 1, for displaying a presentation page of other functions on the App 1.

To sum up, in the process of playing the video 1, the App 1 supports switching from the playing page of the multimedia content to the presentation page of other functions on the App 1, so that the user can conveniently exit the playing page of the video 1 in time when the user does not wish to view the video 1.

Based on the description of the embodiments in Fig. 1A to Fig. 1G, some implementation processes of the hot event display method for application provided by the present disclosure are detailed in conjunction with Fig. 2.

Please refer to Fig. 2, which is a schematic flow diagram of a hot event display method for application, provided by embodiments of the present disclosure. As shown in Fig. 2, the hot event display method for application provided by the present disclosure may comprise the following steps.

In S101, playing first multimedia content in a target event.

After an application is started, an electronic device can play first multimedia content in a target event in the application. The target event is a hot event, and the first multimedia content in the target event is used for describing an occurrence condition of the target event in a certain period of occurrence. The first multimedia content can be presented in a video, text, picture or other manners. The present disclosure does not limit the type of the application, the target event, and the specific implementation of the first multimedia content.

In some embodiments, the application may refer to the description of the App 1 shown in Figs. 1A-1G, the target event may refer to the description of the hot event 1 shown in Fig. 1A, and the first multimedia content may refer to the description of the video 1 played in the user interface 11 shown in Fig. 1A.

In S102, displaying a video collection of the target event in a playing page of the first multimedia content.

The electronic device can play the first multimedia content in a playing page. The playing page is a page of the application. And the electronic device may display the video collection of the target event in the playing page. The video collection is a collection of a plurality of multimedia contents associated in the target event.

In addition, the present disclosure does not limit the display position of the video collection. In some embodiments, the region where the video collection is located is on the bottom of the playing page, so as to avoid disturbing the playing of the multimedia content of the target event.

In the present disclosure, the video collection may comprise: a first card, a second card and a timeline.

The first card is for triggering playing of second multimedia content in the target event, and the second multimedia content in the target event is used for describing an occurrence condition of the target event in a certain period of occurrence. The first card may comprise one or more cards, and accordingly, the second multimedia content comprises one or more multimedia contents in the target event.

The second card is for triggering playing of third multimedia content in the target event, and the third multimedia content in the target event is used for describing an occurrence condition of the target event in a certain period of occurrence. The second card may comprise one or more cards, and accordingly, the third multimedia content comprises one or more multimedia contents in the target event.

In addition, the first multimedia content may be one of the second multimedia content and the third multimedia content. Or the first multimedia content, the second multimedia content and the third multimedia content are three different multimedia contents in one target event.

The timeline records a period of occurrence of the second multimedia content and a period of occurrence of the third multimedia content. The present disclosure does not limit some implementations of the timeline. In some embodiments, the electronic device can identify the period of occurrence in the timeline in a form such as text, icon, and the like.

The first card and the period of occurrence of the second multimedia content are displayed in correspondence with each other, and the second card and the period of occurrence of the third multimedia content are displayed in correspondence with each other. In some embodiments, the period of occurrence of the second multimedia content may be displayed in a surrounding area of the first card, e.g., below the first card. The period of occurrence of the third multimedia content may be displayed in a surrounding area of the second card, e.g., below the second card.

It should be noted that, the number of multimedia contents displayed in the playing page is not limited in the present disclosure, and for example, the number may be determined based on parameters such as a screen size of the electronic device and a display size of the card. Correspondingly, the first card and the second card can be used for triggering the playing of two or more multimedia contents.

The presentation style of the cards is not limited in the disclosure. In some embodiments, the first card and the second card may be arranged horizontally or vertically in the playing page. Thus, the number of the displayed multimedia contents of the target event can be increased.

The presentation mode of the cards is not limited in the disclosure. In some embodiments, the first card comprises: at least one of a cover of the second multimedia content or a title of the second multimedia content, or the first card comprises: at least one of a frame of the second multimedia content or the title of the second multimedia content; the second card comprises: at least one of a cover of the third multimedia content or a title of the third multimedia content, or the first card comprises: at least one of a frame of the third multimedia content or the title of the third multimedia content.

Therefore, the cover, period and title of each multimedia content can be presented, which helps to enrich the presentation information of the multimedia content, and facilitates user understanding.

In some embodiments, on the premise that the first multimedia content may be the second multimedia content, some implementations of the playing page may refer to the description of the user interface 11 shown in Fig. 1B, some implementations of the region where the video collection of the target event is located may refer to the description of the region 1021 in Fig. 1B, some implementations of the first card may refer to the description of the card 2 in the region 1021 in Fig. 1B, some implementations of the second multimedia content may refer to the description of the video 1 in Fig. 1B, some implementations of the second card may refer to the description of the card 3 in the region 1021 in Fig. 1B, some implementations of the third multimedia content may refer to the description of the video 2 in Fig. 1B, some implementations of the timeline may refer to the description of the region 1022 in Fig. 1B, some implementations of the period of occurrence of the second multimedia content may refer to the description of the period 1 of the video 1 in the region 1022 in Fig. 1B, and some implementations of the third multimedia content may refer to the description of the period 2 of the video 2 in the region 1022 in Fig. 1B.

Therefore, when the user watches one multimedia content of the target event, the electronic device can also display the video collection of the associated multimedia contents in the target event to the user, to conveniently present to the user the event context of the target event, such that the user can comprehensively know the cause and effect of the target event.

According to the hot event display method for application provided in the present disclosure, the electronic device can display, in a playing page of one multimedia content of the target event, relevant information of a plurality of multimedia contents associated in the target event, so that a user can comprehensively know the event context of the target event while watching the one multimedia content in the target event. Therefore, presentation of the event context of one target event in the application is realized, so that the user can comprehensively know the target event, without the need of performing operations such as quitting the application or searching in the application, and the user viscosity between the user and the application is improved.

In the present disclosure, the display modes of the cards and the period of occurrence in the video collection comprise various modes.

In some embodiments, the electronic device may display a card corresponding to each multimedia content and a timeline in the video collection, according to a sequence of the periods of occurrence of multimedia contents in the target event.

For example, in a case that the period of occurrence of the second multimedia content is earlier than that of the third multimedia content, the first card may be displayed before the second card, and the period of occurrence of the second multimedia content is displayed earlier than that of the third multimedia content.

Or, in a case that the period of occurrence of the second multimedia content is earlier than that of the third multimedia content, the second card may be displayed before the first card, and the period of occurrence of the third multimedia content is displayed earlier than that of the second multimedia content.

In other embodiments, the electronic device may start the display from a multimedia content whose period of occurrence is the earliest in the target event.

For example, when the second multimedia content is the multimedia content whose period of occurrence is the earliest in the target event, the electronic device may display the first card corresponding to the second multimedia content before the second card corresponding to the third multimedia content.

It should be noted that the present disclosure is not limited to the above two implementations. In addition, the video collection of the target event in each client is the same.

Based on the description of the above embodiments, the electronic device may further switch to the display page of the first multimedia content when the first multimedia content is played by the application.

In some embodiments, the electronic device may switch from playing the first multimedia content to playing the second multimedia content after receiving a triggering operation on the first card.

The triggering operation comprises, but is not limited to, click, double-click, and the like.

For example, when the electronic device receives a click operation on the card 2 of the second multimedia content performed by the user in the region 1021 in Fig. 1C, the electronic device may switch the user interface from the display page of the first multimedia content to the user interface 12.

Based on the description of the above embodiments, when displaying the second multimedia content, the electronic device may continue to display the plurality of multimedia contents in the target event, so that the user can continue to know the multimedia contents related to the second multimedia content.

In some embodiments, the electronic device can display the video collection in a playing page of the second multimedia content. The display modes of the cards and the period of occurrence in the video collection are not limited by the present disclosure.

In some embodiments, in a case that third multimedia content is played in the playing page, the electronic device may display the second card at a first position in the region where the video collection is located.

In other embodiments, in a case that the third multimedia content is played in the playing page, the electronic device may keep the display position of the second card unchanged.

For example, when the electronic device plays the second multimedia content, the display position of the relevant information of the second multimedia content may refer to the display position of the card 2 in the region 102 shown in Fig. 1E.

In addition, the electronic device may highlight the second card and the period of occurrence of the third multimedia content.

Based on the description of the above embodiments, when playing the second multimedia content, the electronic device may further hide the video collection to avoid disturbing the playing of the multimedia content due to the displaying of the video collection.

In some embodiments, the electronic device may hide the video collection in the playing page of the second multimedia content.

For example, while playing the second multimedia content, the electronic device may display the user interface 12 exemplarily shown in Fig. 1F.

In addition, in the playing page of the first multimedia content, the electronic device may hide the video collection after a duration. Therefore, by means of automatic hiding, the electronic device can display a clean playing page for the user to watch the multimedia content. The disclosure does not limit a specific value of the duration.

Based on the description of the above embodiments, when the first multimedia content is played in the user interface of the application, if relevant information of the first multimedia content is displayed in the video collection in the target event, the electronic device may highlight the card and the period of occurrence corresponding to the first multimedia content.

Therefore, the user can conveniently and accurately locate the currently watched multimedia content in the video collection.

In some embodiments, some implementations of the highlighted card and period of occurrence corresponding to the first multimedia content may refer to the description of highlighting the card 1 and the period 1 shown in Fig. 1B.

Based on the description of the above embodiments, a control may be provided in the playing page, for the user to trigger the control in the playing page. The control is used to trigger the display of more multimedia contents. The shape, area, color and other parameters of the control are not limited in the present disclosure.

In the step S102, the electronic device may display the video collection of the target event in multiple implementations.

In some embodiments, after receiving a first triggering operation on the control in the process of playing the first multimedia content, the electronic device may display the video collection in the playing page. Therefore, the video collection formed by a plurality of multimedia contents in one target event can be conveniently displayed by manually triggering the control during the process of watching the playing page.

In other embodiments, after the playing of the first multimedia content is finished and the first triggering operation on the control is not received, the electronic device may display the video collection in the playing page. Therefore, after the user watches the first multimedia content, the video collection formed by the plurality of multimedia contents in one target event can be displayed conveniently by means of automatic trigger.

The first triggering operation may comprise, but is not limited to, click, double click, swipe, and the like. The preset duration may be set to be less than or equal to a playing duration of the first multimedia content, which is not limited in this disclosure.

Based on the description of the above embodiments, in addition to displaying the relevant information of the second multimedia content and the relevant information of the third multimedia content in the video collection of the target event, after receiving a swipe operation on the region where the video collection is located, the electronic device displays, in the video collection, a third card and a period of occurrence of fourth multimedia content in the target event recorded in the timeline, where the third card is for triggering the playing of the fourth multimedia content, and the third card and the period of occurrence of the fourth multimedia content are displayed in correspondence with each other.

The region where the video collection is located is regarded as the first region. In some embodiments, some implementations of the first region may refer to the description of the region 102 in Fig. 1B. In some embodiments, when receiving a swipe operation on the first region, the electronic device may display the card and period of occurrence corresponding to the fourth multimedia content in the first region. The swipe operation may comprise, but is not limited to, swipe up, swipe down, swipe left, and swipe right.

In some embodiments, the fourth multimedia content may refer to the description of the video 4 in the region 102 shown in Fig. 1C, the card corresponding to the fourth multimedia content may refer to the description of the card 4 in the region 102 shown in Fig. 1C, and the period of occurrence corresponding to the fourth multimedia content may refer to the description of the period 4 in the region 102 shown in Fig. 1C.

For example, while playing the first multimedia content, the electronic device may display the region 102 shown in Fig. 1C in response to a swipe operation of the user in the region 102 shown in Fig. 1B, such as swipe left or swipe up. The display position of the card corresponding to the fourth multimedia content is displayed after the display position of the card corresponding to the third multimedia content, that is, the card 4 is displayed after the card 3, and the period of occurrence of the fourth multimedia content is displayed after the period of occurrence of the third multimedia content, that is, the period 4 is displayed after the period 3.

In other embodiments, the fourth multimedia content refers to the description of the multimedia content 0 in the region 102 shown in Fig. 1D, the card corresponding to the fourth multimedia content refers to the description of the card 0 in the region 102 shown in Fig. 1D, and the period of occurrence of the fourth multimedia content refers to the description of the period 0 in the region 102 shown in Fig. 1D.

For example, while playing the first multimedia content, the electronic device may display the region 102 shown in Fig. 1D in response to a swipe operation of the user in the region 102 shown in Fig. 1B, such as swipe right or a swipe down. The display position of the card corresponding to the fourth multimedia content is displayed before the display position of the card corresponding to the first multimedia content, that is, the card 0 is displayed before the card 1; and the period of occurrence of the fourth multimedia content is displayed before the period of occurrence of the first multimedia content, that is, the period 0 is displayed before the period 1.

It should be noted that, in a case that the first card is displayed before the second card, if there is no other cards in the video collection before the first card, the electronic device cannot display the third card and the period of occurrence of the fourth multimedia content. If there is no other cards in the video collection after the second card, the electronic device cannot display the third card and the period of occurrence of the fourth multimedia content.

The number of more multimedia contents in the target event displayed in the first region is not limited by the present disclosure. The fourth multimedia content is at least one multimedia content of the more multimedia contents in the target event, and the first multimedia content, the second multimedia content, the third multimedia content and the fourth multimedia content belong to one target event in the application.

The fourth multimedia content is used for describing an occurrence condition of the target event in a certain period of occurrence. The card corresponding to the fourth multimedia content is used for triggering the playing of the fourth multimedia content in the target event. Therefore, by means of trigger by a swipe operation, the electronic device can display relevant information of more multimedia contents in one target event to the user. The relevant information may comprise cards and periods.

It should be noted that, in addition to the above implementations, the electronic device may display the relevant information of the fourth multimedia content in the first region after a duration. Therefore, by means of automatic trigger, the electronic device can display relevant information of more multimedia contents in one target event to the user. The disclosure does not limit a specific value of the duration.

Based on the description of the above embodiments, the electronic device may also hide the video collection of the target event, avoiding the problem of disturbing the playing of the multimedia content due to the display of the video collection.

In some embodiments, the control may trigger the hiding of the video collection in addition to triggering the display of more multimedia contents. Therefore, after receiving the second triggering operation on the control, the electronic device may hide the video collection in the playing page.

The second triggering operation may comprise, but is not limited to, click, double-click, swipe, etc.

For example, the second triggering operation on the control is a click operation performed by the user on the control 101 in the user interface 11 shown in Fig. 1B, and after the application receives the click operation performed by the user on the control 101 in the user interface 11 shown in Fig. 1B, the user interface displayed in the mobile phone may refer to the display of the user interface 11 shown in Fig. 1A.

In other embodiments, after receiving a triggering operation on a blank region of the playing page except for a region where the video collection is located, the electronic device may hide the video collection in the playing page.

The triggering operation may comprise, but is not limited to, click, double click, etc.

For example, the triggering operation on the blank region is a clicking operation performed by the user in the blank region in the user interface 11 shown in Fig. 1B, and after the application receives the clicking operation performed by the user in the blank region in the user interface 11 shown in Fig. 1B, the user interface displayed in the mobile phone may refer to the display of the user interface 11 shown in Fig. 1A.

Based on the description of the above embodiments, the electronic device may also display multimedia contents in other events in addition to the first multimedia content of the target event; the target event and the other events are different events in the application.

In some embodiments, after receiving a first swipe operation on the blank region in the playing page except for the region where the video collection is located, the electronic device may play one multimedia content of other event different from the target event.

The multimedia contents of the other events can be presented in video, text, picture or other manners.

The first swipe operation may be a swipe operation such as swipe up or down, which is not limited in this disclosure.

Therefore, while the user watches the multimedia content of one target event, the electronic device can display to the user multimedia content of other event, so that the user can know presentation information of more events conveniently.

Based on the description of the above embodiments, the electronic device may display on the user interface, in addition to the first multimedia content of the target event, presentation content of other user interfaces, so as to be compatible with multiple functions of the application.

In some embodiments, after receiving a second swipe operation on the blank region in the playing page except for the region where the video collection is located, the electronic device may switch from the playing page to display a user account page corresponding to the first multimedia content.

The second swipe operation may be a swipe operation such as swipe left, which is not limited in this disclosure.

For example, when playing the user interface 11 shown in Fig. 1A, the electronic device may, in response to a swipe operation such as swipe left performed by the user on the user interface 11, switch from the playing page of the user interface 11 to display the presentation page of the user interface 13 shown in Fig. 1G.

Therefore, when the electronic device displays the playing page of the multimedia content of the target event, the user account page of the publisher of the multimedia content can be displayed according to the triggering operation of the user on the playing page, which facilitates the user to know the publisher in detail.

In other embodiments, after receiving a third swipe operation on the playing page, the electronic device may exit the playing page to display a presentation page of other functions in the application.

The second swipe operation may be a swipe operation such as swipe right, which is not limited in this disclosure.

Therefore, when the electronic device displays the playing page of the multimedia content of the target event, the electronic device can exit the playing page according to the triggering operation of the user on the playing page, and display a presentation page of other functions in the application, so that the user can exit the playing page in time when the user does not wish to view the playing page.

Through the method provided in the first aspect, in a playing page of one multimedia content of the target event, the electronic device may display relevant information of a plurality of multimedia contents associated in the target event, so that the user may also comprehensively know an event context of the target event while watching the one multimedia content of the target event. Therefore, the presentation of the event context of one target event in the application is realized, so that a user can comprehensively know the target event, without the need to perform operations such as quitting the application or searching in the application, and the user viscosity between the user and the application is improved.

In some embodiments, the present disclosure provides a hot event display apparatus for application.

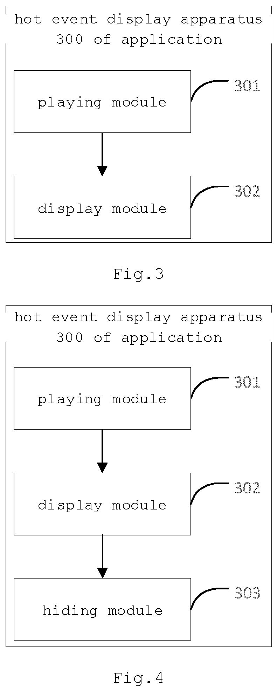

Please refer to Fig. 3, which is a schematic structural diagram of a hot event display apparatus for application, provided by embodiments of the present disclosure. The hot event display apparatus for application of the present disclosure may be disposed in an electronic device, and may implement the operations of the hot event display method for application according to the embodiments of Fig. 1 to Fig. 2 corresponding to the electronic device.

As shown in Fig. 3, a hot event display apparatus 300 of an application provided in the present disclosure may comprise: a playing module 301 and a display module 302; the playing module 301 is configured to play first multimedia content in a target event; the display module 302 is configured to display a video collection of the target event in a playing page of the first multimedia content, wherein the video collection comprises a first card, a second card and a timeline, the first card is for triggering playing of second multimedia content in the target event, the second card is for triggering playing of third multimedia content in the target event, the timeline records a period of occurrence of the second multimedia content and a period of occurrence of the third multimedia content, the first card and the period of occurrence of the second multimedia content are displayed in correspondence with each other, and the second card and the period of occurrence of the third multimedia content are displayed in correspondence with each other.

In some embodiments, the playing module 301 is further configured to switch from the first multimedia content to play the second multimedia content after receiving the triggering operation on the first card.

In some embodiments, the display module 302 is configured to display the video collection in a playing page of the second multimedia content.

Please refer Fig. 4, which is a schematic structural diagram of a hot event display apparatus for application, provided by embodiments of the present disclosure. As shown in Fig. 4, a hot event display apparatus 300 of an application provided in the present disclosure may further comprise, on the basis of the structure shown in Fig. 3: a hiding module 303.

The hiding module 303 is configured to hide the video collection in a playing page of the second multimedia content.

In some embodiments, the region where the video collection is located is on the bottom of the playing page.

In some embodiments, the first card comprise: at least one of a cover of the second multimedia content or a title of the second multimedia content, or the first card comprises: at least one of a frame of the second multimedia content or the title of the second multimedia content; the second card comprises: at least one of a cover of the third multimedia content or a title of the third multimedia content, or the first card comprises: at least one of a frame of the third multimedia content or the title of the third multimedia content.

In some embodiments, the display module 302 is configured to: according to a sequence of a period of occurrence of each multimedia content in the target event, display a card and a timeline corresponding to each multimedia content in the video collection.

In some embodiments, the display module 302 is further configured to: highlight a card and a period of occurrence corresponding to the first multimedia content.

In some embodiments, the display module 302 is configured to: after receiving a first triggering operation on one control in the playing page in a process of playing the first multimedia content, or after the playing of the first multimedia content is finished and the first triggering operation on one control in the playing page is not received, display the video collection in the playing page.

In some embodiments, the hiding module 303 is configured to: after receiving a second triggering operation on one control, or after receiving a triggering operation on a blank region except for a region where the video collection is located in the playing page, hide the video collection in the playing page.

In some embodiments, the display module 302 is further configured to: after receiving a swipe operation on a region where the video collection is located, display, in the video collection, a third card and a period of occurrence of fourth multimedia content in the target event recorded in the timeline, wherein the third card is for triggering playing of the fourth multimedia content, and the third card and the period of occurrence of the fourth multimedia content are displayed in correspondence with each other.

In some embodiments, the playing module 301 is further configured to: after receiving a first swipe operation on a blank region except for a region where the video collection is located in the playing page, play one multimedia content in other event different from the target event.

In some embodiments, the display module 302 is further configured to: after receiving a second swipe operation on a blank region except for a region where the video collection is located in the playing page, switch from the playing page to display a user account page corresponding to the first multimedia content.

In some embodiments, the video collection of the target event is the same in clients.

The beneficial effects of the hot event display apparatus for application provided in the second aspect and various possible designs of the second aspect may refer to the beneficial effects brought by the first aspect and various possible embodiments of the first aspect, which are not repeated herein again.

The hot event display apparatus for application provided by the present disclosure may perform the above method embodiments, and for the implementation principles and the technical effects thereof, reference may be made to the above method embodiments, which are not repeated herein again.

In some embodiments, the present disclosure provides an electronic device comprising: one or more processors; a memory; and one or more computer programs; wherein the one or more computer programs are stored in the memory; the one or more processors, when executing the one or more computer programs, cause the electronic device to implement the hot event display method for application of the foregoing embodiments.

In some embodiments, the present disclosure provides a chip system applied to an electronic device comprising a display, a memory, and a sensor; the chip system comprises: a processor; when the processor executes computer instructions stored in the memory, the electronic device performs the hot event display method for application of the foregoing embodiments.

In some embodiments, the present disclosure provides a computer-readable storage medium, having stored thereon a computer program, which when executed by a processor, causes an electronic device to implement the hot event display method for application of the foregoing embodiments.

In some embodiments, the present disclosure provides a computer program product, which when running on a computer, causes the computer to perform the hot event display method for application of the foregoing embodiments.

In some embodiments, the present disclosure provides a computer program comprising: instructions, which when executed by a processor, cause the processor to perform the hot event display method for application according to any of the embodiments described above.

In the above-described embodiments, all or part of the functions may be implemented in software, hardware, or a combination of software and hardware. When implemented in software, it may be implemented in whole or in part in the form of a computer program product. The computer program product comprises one or more computer instructions. The procedures or functions according to the embodiments of the disclosure are all or partially generated when the computer program instructions are loaded and executed on a computer. The computer may be a general purpose computer, a special purpose computer, a computer network, or other programmable devices. The computer instructions may be stored in a computer readable storage medium. The computer readable storage media can be any available media that can be accessed by a computer or an integrated data storage device, such as a server, data center, etc., that comprises one or more available media. The available medium may be a magnetic medium (e.g., a floppy disk, a hard disk, a magnetic tape), an optical medium (e.g., a DVD), or a semiconductor medium (e.g., a Solid State Disk (SSD)), among others.

It is noted that, in this document, relational terms such as "first" and "second" and the like, are used solely to distinguish one entity or action from another entity or action without necessarily requiring or implying any actual such relationship or order between such entities or actions. Also, the terms "comprise" "comprise" or any other variation thereof, are intended to cover a non-exclusive inclusion, such that a process, method, article, or device that comprises a list of elements does not comprise only those elements but may comprise other elements not expressly listed or inherent to such process, method, article, or device. Without further limitation, an element defined by the phrase "comprising an ··· ···" does not exclude the presence of other identical elements in the process, method, article, or device that comprises the element.

The foregoing are merely exemplary embodiments of the present disclosure, which will enable those skilled in the art to understand or practice the present disclosure. Various modifications to these embodiments will be obvious to those skilled in the art, and the generic principles defined herein may be realized in other embodiments without departing from the spirit or scope of the present disclosure. Thus, the present disclosure is not intended to be limited to the embodiments shown herein but is to be accorded the widest scope consistent with the principles and novel features disclosed herein.

## Claims

1. A hot event display method for application, comprising:
playing a first multimedia content in a target event; and
displaying a video collection of the target event in a playing page of the first multimedia content, wherein the video collection comprises a first card for triggering playing of a second multimedia content in the target event, a second card for triggering playing of a third multimedia content in the target event, and a timeline recording a period of occurrence of the second multimedia content and a period of occurrence of the third multimedia content, the first card and the period of occurrence of the second multimedia content are displayed in correspondence with each other, and the second card and the period of occurrence of the third multimedia content are displayed in correspondence with each other.

2. The hot event display method for application according to claim 1, further comprising:
switching from playing the first multimedia content to playing the second multimedia content, after receiving a triggering operation on the first card.

3. The hot event display method for application according to claim 2, further comprising:
displaying the video collection in a playing page of the second multimedia content.

4. The hot event display method for application according to claim 2, further comprising:
hiding the video collection in a playing page of the second multimedia content.

5. The hot event display method for application according to any of claims 1 to 4, wherein a region where the video collection is located is on a bottom of a playing page.

6. The hot event display method for application according to any of claims 1 to 5, wherein:
the first card comprises at least one of a cover of the second multimedia content or a title of the second multimedia content, or the first card comprises at least one of a frame of the second multimedia content or the title of the second multimedia content; and
the second card comprises at least one of a cover of the third multimedia content or a title of the third multimedia content, or the first card comprises at least one of a frame of the third multimedia content or the title of the third multimedia content.

7. The hot event display method for application according to any of claims 1 to 6, further comprising:
displaying a card and a timeline corresponding to a multimedia content in the video collection, according to a sequence of period of occurrence of multimedia contents in the target event.

8. The hot event display method for application according to any of claims 1 to 7, further comprising:
highlighting the card and the period of occurrence corresponding to the first multimedia content.

9. The hot event display method for application according to any of claims 1 to 8, wherein the displaying the video collection of the target event comprises:
displaying the video collection in the playing page, after a first triggering operation on a control is received in the playing page in a process of playing the first multimedia content, or after the playing of the first multimedia content is finished and the first triggering operation on the control in the playing page is not received.

10. The hot event display method for application according to claim 9, further comprising:
hiding the video collection in the playing page, after receiving a second triggering operation on the control, or after receiving a triggering operation on a blank region except for a region where the video collection is located in the playing page.

11. The hot event display method for application according to any of claims 1 to 10, further comprising:
in the video collection, displaying a third card for triggering playing of a fourth multimedia content and a period of occurrence of the fourth multimedia content in the target event recorded in the timeline, after receiving a swipe operation on a region where the video collection is located, wherein the third card and the period of occurrence of the fourth multimedia content are displayed in correspondence with each other.

12. The hot event display method for application according to any of claims 1 to 11, further comprising:
playing one multimedia content in other event different from the target event, after receiving a first swipe operation on a blank region except for a region where the video collection is located in the playing page; or
switching from the playing page to display a user account page corresponding to the first multimedia content, after receiving a second swipe operation on the blank region except for the region where the video collection is located in the playing page.

13. The hot event display method for application according to any of claims 1 to 12, wherein the video collection of the target event is the same in clients.

14. A hot event display apparatus for application, comprising:
a playing module, configured to a first multimedia content in a target event; and
a display module, configured to display a video collection of the target event in a playing page of the first multimedia content, wherein the video collection comprises a first card for triggering playing of a second multimedia content in the target event, a second card for triggering playing of a third multimedia content in the target event, and a timeline recording a period of occurrence of the second multimedia content and a period of occurrence of the third multimedia content, the first card and the period of occurrence of the second multimedia content are displayed in correspondence with each other, and the second card and the period of occurrence of the third multimedia content are displayed in correspondence with each other.

15. An electronic device, comprising: one or more processors; a memory; and one or more computer programs; wherein the one or more computer programs are stored in the memory; the one or more processors, when executing the one or more computer programs, cause the electronic device to implement the hot event display method for application according to any of claims 1 to 13.

16. A non-transitory computer storage medium comprising computer instructions, which when run on an electronic device, cause the electronic device to perform the hot event display method for application according to any of claims 1 to 13.

17. A computer program product, which when run on a computer, causes the computer to perform the hot event display method for application according to any of claims 1 to 13.

18. A computer program comprising:
instructions, which when executed by a processor, cause the processor to perform the hot event display method for application according to any of claims 1 to 13.
